Europäisches Patentamt

(19) European Patent Office

Office européen des brevets

(11) Numéro de publication : **0 233 825 B1**

(12) **FASCICULE DE BREVET EUROPEEN**

(45) Date de publication du fascicule du brevet :
**10.04.91 Bulletin 91/15**

(21) Numéro de dépôt : **87420013.2**

(22) Date de dépôt : **13.01.87**

(51) Int. Cl.⁵ : $C03C\ 17/00$, $C23C\ 16/50$, $H01J\ 37/32$

(54) **Procédé, dispositif et matériel pour le depot d'une couche mince d'un matériau sur la paroi d'un corps creux.**

(30) Priorité : **14.01.86 FR 8600586**

(43) Date de publication de la demande :
**26.08.87 Bulletin 87/35**

(45) Mention de la délivrance du brevet :
**10.04.91 Bulletin 91/15**

(84) Etats contractants désignés :
**AT BE CH DE ES FR GB GR IT LI LU NL SE**

(56) Documents cités :
**FR-A- 2 248 882**
**FR-A- 2 355 925**
**FR-A- 2 446 327**
**CHEMICAL ABSTRACTS, vol. 102, no. 6,**
**février 1985, page 263, résumé no. 50027j,**
**Columbus, Ohio, US; & JP-A-59 174 507**
**(NANBA, YOSHIKATSU) 03-10-1984**

(73) Titulaire : **CENTRE NATIONAL DE LA RECHERCHE SCIENTIFIQUE (CNRS)**
**13 Quai Anatole France**
**F-75700 Paris (FR)**

(72) Inventeur : **Mackowski, Jean-Marie**
**41 avenue Albert Einstein**
**F-69100 Villeurbanne (FR)**

(74) Mandataire : **Laurent, Michel**
**Cabinet LAURENT et CHARRAS, 20, rue Louis Chirpaz B.P. 32**
**F-69131 Ecully Cédex (FR)**

EP 0 233 825 B1

## Description

L'invention se rapporte au dépôt d'une couche mince d'un matériau, par exemple de carbone amorphe adamantin, à l'extérieur et/ou à l'intérieur de la paroi d'un corps creux, par exemple en verre ou matière vitreuse.

Par "materiau", on entend toute matière, organique ou inorganique, simple ou complexe, susceptible d'être obtenue en phase gazeuse, par association ou non avec un autre élément, lequel, après décomposition à l'aide d'un plasma, sera évacué sélectivement de l'enceinte de mise en oeuvre du plasma.

Ainsi, si l'on considère le carbone en tant que matériau au sens de la présente invention, par association avec l'hydrogène, par exemple sous forme de méthane ou d'un autre hydrocarbure, ce dernier est susceptible de se décomposer sous forme de plasma, en ions carbones et ions hydrogène ; ces derniers, par recombinaison, sont susceptibles d'être évacués sous forme d'hydrogène, de l'enceinte du plasma.

Par "verre ou matière vitreuse", on englobe non seulement les verres organiques ou inorganiques, mais également tous les matériaux vitreux, quelque soit l'ordre local, ainsi que les céramiques.

Par "carbone amorphe adamantin", on entend un carbone sans structure cristalline apparente, hydrogéné ou non, ne comportant pas d'ordre local à l'échelle de quelques nanomètres.

Par "couche mince", on entend une couche ayant une épaisseur comprise entre 10 et 100 nanomètres, quasitransparente, et souvent invisible pour l'utilisateur.

Quoique la présente invention ne soit pas limitée à cette application, celle-ci est maintenant décrite par référence au dépôt d'une couche de carbone amorphe adamantin sur un objet creux en verre.

Afin d'améliorer les propriétés mécaniques d'un objet en verre, en particulier la résistance aux chocs, à la rayure, mais aussi afin d'améliorer la résistance à la corrosion du même objet, il est connu de mettre ledit objet en contact avec un plasma d'une matière hydrocarbonée, pour développer à sa surface une couche mince de carbone amorphe adamantin, lui conférant les propriétés recherchées, en particulier grâce à une compression de ses couches superficielles.

Un tel procédé a par exemple été décrit dans le brevet GB-A-2 105 371 pour des fibres optiques en verre. Lesdites fibres optiques sont disposées au sein d'une cathode ayant la forme d'une hélice ou d'un tube percé d'orifices de forme générale rectangulaire, dont la localisation tout au long dudit tube est agencée selon une hélice. Cette disposition relative est destinée à provoquer une polarisation non continue de la fibre optique, suffisante pour la revêtir totalement d'une couche uniforme, compte tenu de sa dimension transversale bien inférieure par rapport à l'épaisseur de l'espace noir généré. Toutefois, un tel procédé n'est pas applicable pour des objets de dimensions nettement plus grandes et en tout état de cause, supérieures à l'épaisseur de l'espace noir généré. En effet, cette polarisation non continue ne rendrait plus possible le dépôt d'une couche mince au niveau des discontinuités de polarisation. De plus, cette architecture n'est pas envisageable pour revêtir les surfaces internes des corps creux.

Un article de A. BUBENZER, B. DISCHLER, G. BRANDT, et P. KOIDL, dans le "Journal of Applied Physics", no. 931 du 8 Août 1983, volume 54, pages 4590 à 4595, a précisé les conditions d'obtention d'une telle couche mince, en particulier les différents paramètres du plasma influençant la densité, l'épaisseur, et les propriétés adamantines de la couche obtenue. Au rang de ces paramètres, figurent en particulier l'énergie des ions hydrocarbonés, le potentiel de la cathode, la pression gazeuse et la température du substrat à revêtir de la couche mince.

Par ailleurs, d'autres voies de déposition de carbone amorphe, par décomposition sous vide d'un matériau carboné, ont été proposées :
- la pulvérisation réactive radio-fréquence (diode, coaxiale, magnétron) ;
- la pulvérisation ionique, notamment par canon;
- les faisceaux d'ions, c'est-à-dire une pulvérisation ionique, assistée par un second canon ;
- l'implantation ionique.

La présente invention s'intéresse spécifiquement au dépôt d'une couche mince d'un matériau sur un corps creux, réalisé en matériau non conducteur tel que par exemple du verre ou de la matière vitreuse, et en particulier une bouteille. Elle a pour objet une méthode de dépôt d'une telle couche mince, à l'extérieure et/ou à l'intérieur d'un tel corps creux, et spécifiquement adapté à celui-ci.

Selon l'invention, parmi les différents procédés de dépôt énumérés précédemment, on a découvert que, seule, la décomposition d'un matériau par plasma (par décharge continue ou radio-fréquence) était bien adaptée au traitement de corps creux, en particulier dans le cadre de processus industriels en continu. Plus précisément, en disposant une cathode à l'intérieur du corps creux, et l'autre électrode à l'extérieur de ce dernier, il est possible d'induire une charge négative sur les deux surfaces (intérieure et extérieure) du corps creux, moyennant quoi celles-ci peuvent être revêtues, au contact d'un plasma, d'une couche mince et uniforme du matériau.

Cette méthode se <u>caractérise</u> en ce que l'on dispose une cathode à l'intérieur du corps creux à revêtir, dont le volume apparent est conformé et proportionné au volume interne dudit corps creux, afin de générer au contact de ce dernier un plasma d'un complexe gazeux contenant ledit matériau de revêtement, introduit dans ledit corps creux.

Par rapport aux autres voies de dépôt en couche mince, la solution selon l'invention présente les avantages déterminants suivants :

1/ on peut revêtir aussi bien l'intérieur que l'extérieur du corps creux ;

2/ en polarisant de manière uniforme la paroi elle-même du corps creux, on obtient une couche mince homogène sur toute la surface intérieure et/ou extérieure dudit corps.

Selon l'invention, la distance séparant la surface interne dudit corps et la surface apparente de la cathode est égale à une valeur au plus égale à l'épaisseur de l'espace noir en vis-à-vis de la cathode, dans les conditions du plasma mis en oeuvre.

Selon la présente invention, il doit être entendu que la cathode peut être en contact avec la paroi du corps creux.

Par "espace noir", on entend la zone au voisinage de la cathode dans laquelle les ions du plasma passent du potentiel du plasma à celui de la cathode, et sont en conséquence accélérés vers la cathode. L'épaisseur de cet espace dépend des différents paramètres de mise en oeuvre du plasma, explicités par exemple dans l'article de A. BUBENZER et al, cité ci-dessus.

La présente invention est maintenant décrite par référence aux dessins annexés, dans lesquels :

– la figure 1 représente un dispositif cathodique conforme à l'invention, en position de travail à l'intérieur d'une bouteille, ou corps creux ;

– la figure 1a est une vue agrandie d'une partie de la figure 1 ;

– la figure 2 représente le même dispositif, en position rétractée, pour son extraction par le col de la bouteille.

– la figure 3 représente un autre dispositif cathodique conforme à l'invention.

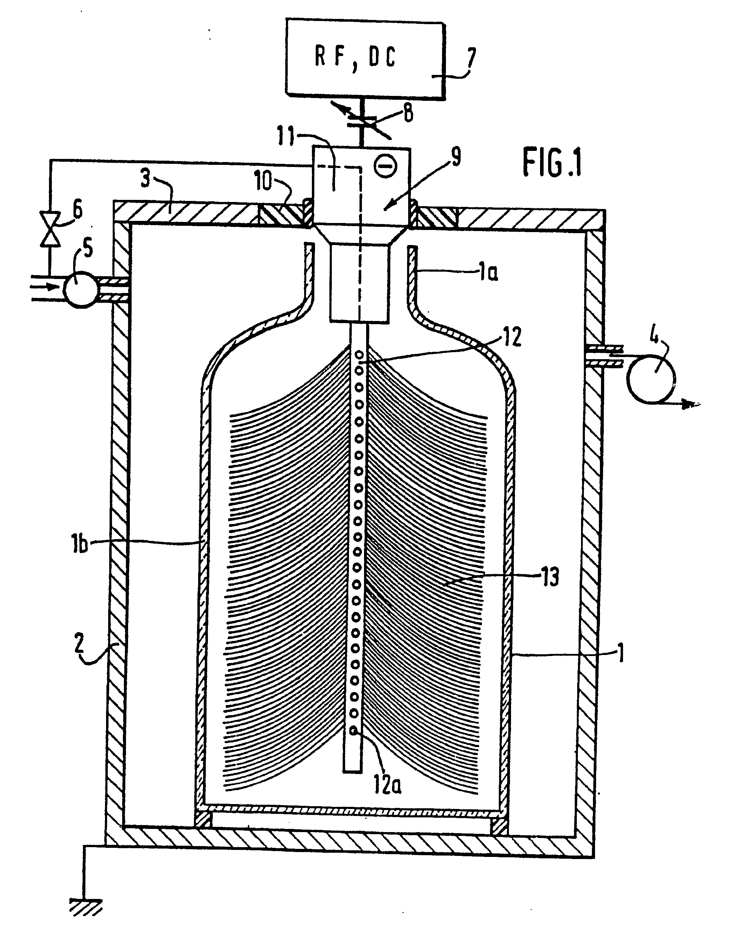

Conformément à la figure 1, on a représenté schématiquement un matériel pour le dépôt d'une couche mince de carbone amorphe adamantin sur la paroi, c'est-à-dire à l'extérieur et/ou à l'intérieur de cette dernière, d'une bouteille en verre (1), laquelle comporte un col (1a) de section étroite et une partie principale (1b) de section plus large.

Ce matériel comporte, de manière générale :

– une enceinte métallique et cylindrique (2), comportant un couvercle (3) ; cette enceinte est reliée électriquement à la masse ;

– une pompe à vide (4) permettant d'évacuer l'enceinte (2), et de pomper sélectivement l'hydrogène résultant de la decomposition du plasma existant en fonctionnement dans ladite enceinte ;

– une vanne (5) permettant d'introduire dans l'enceinte (3), éventuellement par l'intermédiaire d'une distribution en volume appropriée, un débit calibré et réglable de méthane, à l'extérieur de la bouteille (1) ;

– un robinet (6) permettant d'introduire, par l'intermédiaire du dispositif cathodique décrit ci-après, un débit calibré et réglable de méthane, à l'intérieur de l'enceinte (2), et à l'intérieur également de la bouteille (1) ;

– un générateur électrique (7), relié au dispositif cathodique, par l'intermédiaire d'une capacité variable (8), permettant de générer un plasma au sein de l'enceinte (2), par courant continu ou radio-fréquence ;

– le dispositif cathodique (9) proprement dit, isolé électriquement de l'enceinte (2), par une rondelle (10) en matériau isolant.

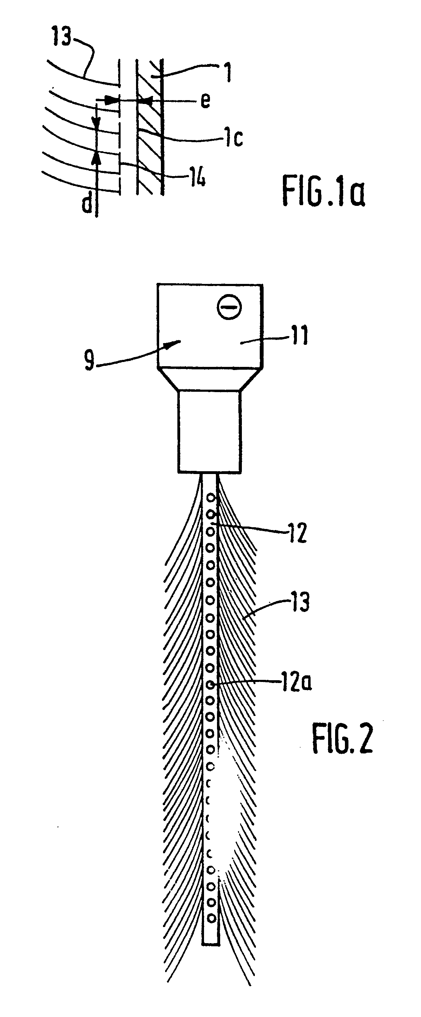

Le dispositif cathodique (9) comporte un culot (11) métallique, un noyau métallique axial (12), et une multitude de fils métalliques (13), disposés autour du et en contact électrique avec le noyau (12), sur toute la longueur de ce dernier. Des moyens non représentés permettent de rétracter les fils (13), de la conformation développée à section large, représentée à la figure 1, à la conformation ramassée, à section étroite, représentée à la figure 2. Cette géométrie variable de la cathode permet d'introduire et d'extraire cette dernière, sous la forme ramassée, de la bouteille (1) par son col (1a).

Conformément à la figure 1a, en fonctionnement, et dans la conformation développée représentée à la figure 1, la distance $d$ séparant les extrémités libres des fils métalliques (13), est du même ordre de grandeur que l'épaisseur $e$ de l'espace noir en vis-à-vis de la cathode, dans les conditions du plasma mis en oeuvre. De cette manière, la surface enveloppant et comprenant les extrémités libres des fils (13) se comporte comme une cathode en volume, conformée et proportionée au volume interne de la bouteille (1), la distance entre la surface intérieure (1c) de cette dernière et la surface apparente (14) de la cathode étant égale à l'épaisseur $e$ de l'espace noir vis-à-vis de ladite cathode, dans les conditions du plasma mis en oeuvre (conférer figure 1a).

Comme représenté à la figure 1, le culot (11) de la cathode (9) comporte un conduit pour la distribution, par des perforations (12a) du noyau central (12), du méthane introduit dans l'enceinte (2), et plus précisement à l'intérieur de la bouteille (1).

En fermant ou ouvrant les robinets (5) et (6), et en particulier en obturant le col (1a) de la bouteille (1) avec le culot (11) de la cathode (9), on peut au choix introduire le méthane à l'intérieur et/ou à l'extérieur de la bouteille (1).

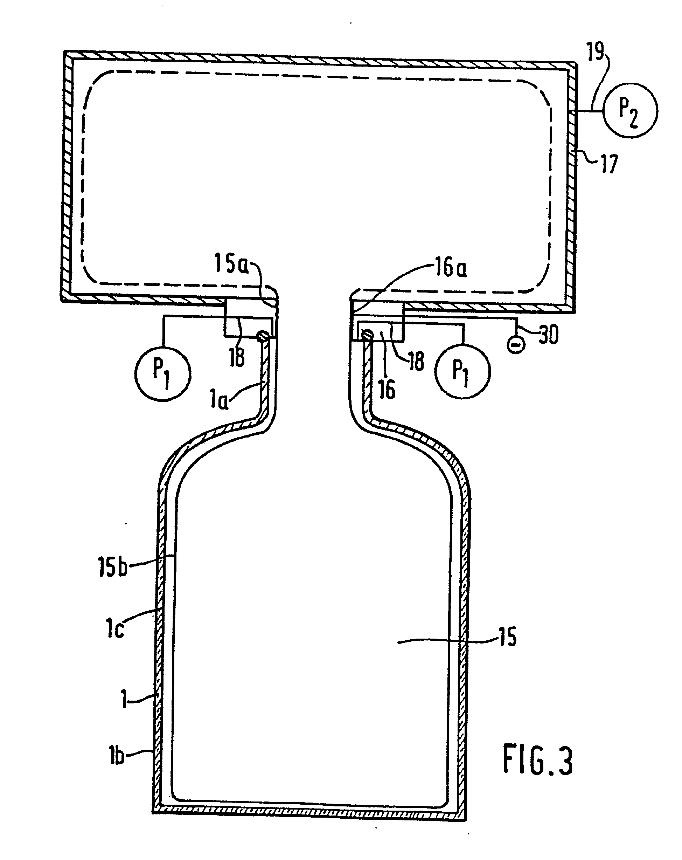

Un autre dispositif cathodique conforme à l'invention, représenté à la figure 3, comprend :

– une enveloppe (15) en forme de sac, conformée et proportionnée à la bouteille à traiter, en matériau souple étanche, par exemple en matière plastique, métallisé au moins d'un côté, à savoir à l'extérieur de la conformation représentée en traits pleins à la figure 1 ;

– un bouchon (16) en matériau isolant électrique, susceptible d'obturer le col (1a) de la bouteille (1), comportant une ouverture axiale (16a), sur laquelle est solidarisé de manière étanche le col (15a) du sac (15) ;

– une enceinte métallique (17), fixée de manière étanche sur le bouchon (16), à l'extérieur de la bouteille (1) ;

– des canaux (18), prévus à l'intérieur du bouchon (16), permettent de mettre en communication une source gazeuse sous la pression P1, avec l'espace situé à l'intérieur de la bouteille (1), entre la face interne (1c) de cette dernière et la face extérieure (15b) métallisée de l'enveloppe (15). Par ailleurs, un conduit (19) permet de mettre en communication l'intérieur de la boite (17), et donc du sac (15), avec une source gazeuse à la pression P2.

En pilotant la différence de pression entre les sources P1 et P2, il est possible de faire rentrer l'enveloppe (15) à l'intérieur de la bouteille (1), selon la conformation représentée en traits pleins à la figure 3, et de faire sortir la même enveloppe (15), en position retournée, de la bouteille (1), selon la position représentée en traits discontinus, à l'intérieur de la boite (17), selon la figure 3.

La position de travail cathodique correspond à celle représentée en traits pleins à la figure 3, dans laquelle la partie extérieure et métallisée du col (15a) est en contact électrique avec une cathode (30) ; et comme précédemment, la distance entre la surface intérieure (1c) de la bouteille et la surface extérieure (15b) de l'enveloppe est choisie à une valeur au plus égale à l'épaisseur de l'espace noir en vis-à-vis de la cathode (à savoir le sac métallisé (15)), dans les conditions du plasma mis en oeuvre.

Un matériel conforme à la figure 1 s'utilise de la manière suivante :

a) on dispose la bouteille (1) à l'intérieur de l'enceinte (1),

b) on rétracte les fils (13) de la cathode (9), selon la position représentée à la figure 2, et on introduit celle-ci par le col (1a) de la bouteille (1),

c) on déploie les fils (13) selon la position représentée à la figure 1,

d) on ferme l'enceinte (2) avec le couvercle (3), la cathode étant montée de manière étanche et isolée électriquement par rapport à ce dernier,

e) on évacue l'enceinte (4), puis on introduit par les vannes (5) et/ou (6) le méthane,

f) grâce au générateur (7), on obtient un plasma du gaz introduit dans l'enceinte (2), lequel entraîne un dépôt de carbone, amorphe adamantin, sur la face extérieure et/ou la face intérieure de la paroi de la bouteille (1),

g) le traitement étant terminé, on répète les opérations précédentes en sens inverse, pour extraire la bouteille traitée de l'enceinte (2).

De manière industrielle, le procédé décrit précédemment peut être effectué en continu sur la chaîne de fabrication des bouteilles en verre, le dépôt de carbone amorphe étant effectué par exemple en série, dans une chambre à vide.

En pratique, les conditions opératoires préférées sont les suivantes :

– l'énergie des espèces carbone déposées doit avoir une énergie d'impact d'au moins cinq cents électrons volts ; on a déterminé que si cette énergie était inférieure à ce seuil de cinq cents électrons volts, la couche déposée n'était pas suffisamment dure ; en revanche, si cette énergie excède vingt-mille électrons volts, on n'obtenait plus une couche, mais on réalisait une véritable implantation de carbone ;

– la vitesse de dépôt doit être d'au moins 30 nanomètres par minute ; en effet, si cette vitesse était inférieure à ce seuil, le procédé serait moins efficace, car la dureté est proportionnelle à la vitesse de dépôt ; comme on comprend, il est préférable que la vitesse soit la plus élevée possible.

Avec un dispositif selon la figure 1, on obtient une véritable trempe physique, en développant à la surface des bouteilles traitées des contraintes de compression axiale de l'ordre de $10^8$ Pascals.

Plus précisément, si :

– on polarise en continu la cathode (9) à 700 V

– on maintient une pression de $9.10^{-2}$ millibars dans l'enceinte (2),

– on introduit dans l'enceinte (2), par la vanne (5), un débit de 25 cm3/mn de méthane, dans les conditions normales de pression et température, on obtient alors, à l'extérieur de la bouteille (1) une couche de 30 nanomètres de carbone amorphe adamantin, présentant une dureté KNOOP de 4000 kg/mm2, sous une charge de 30 g appliquée pendant 30 secondes.

## Revendications

1. Procédé de dépôt d'une couche mince d'un matériau, par exemple de carbone amorphe adamantin, sur la paroi d'un corps creux (1) réalisé en matériau non conducteur de l'électricité tel que le verre ou une matière vitreuse, **caractérisé** en ce l'on dispose une cathode (9) à l'intérieur du corps creux (1) à revêtir, dont le volume apparent effectif (14, 15b) est conformé et proportionné au volume interne dudit corps creux (1), afin de générer au contact de ce dernier un plasma d'un complexe gazeux contenant ledit matériau de revêtement, par exemple un hydrocarbure, introduit dans ledit corps creux (1).

2. Procédé selon la revendication 1, caractérisé en ce que la distance séparant la surface intérieure (12) dudit corps creux (1) et la surface apparente (14, 15b) de la cathode est déterminée à une valeur au plus égale à l'épaisseur (2) de l'espace noir généré en vis-à-vis de la cathode dans les conditions de plasma mises en oeuvre.

3. Procédé selon les revendications 1 et 2, selon lequel le corps creux à traiter comporte un col (1a) de section plus étroite que celle de la partie principale (1b) dudit corps, caractérisé en ce que la cathode (9) est à géométrie variable, de manière à pouvoir pénétrer sous forme ramassée dans le col, puis se développer dans la partie principale sous la forme dudit volume apparent et effectif, et inversement.

4. Procédé selon l'une des revendications 1 à 3, selon lequel le corps creux à traiter est une bouteille, caractérisé en ce que le dépôt de la couche mince du matériau est effectué en série en continu sur la chaine de fabrication de ladite bouteille, dans une chambre à vide.

5. Procédé de dépôt d'une couche mince d'un matériau sur la paroi d'un corps creux présentant une surface interne définissant ainsi un volume interne et une surface externe, caractérisé en ce qu'il consiste:
   – à insérer une cathode (9) à l'intérieur dudit corps creux au voisinage de la surface interne dudit corps (1), ladite cathode présentant un volume apparent et effectif tel qu'elle puisse être insérée dans le corps creux puis étendue radialement afin de remplir substantiellement ledit volume interne dudit corps creux ;
   – à positionner une électrode placée au voisinage de la surface externe dudit corps creux ;
   – à munir le corps creux d'un bouchon de fermeture, de telle sorte que la cathode soit disposée à l'intérieur de celui-ci de manière étanche et soit isolée électriquement ;
   – à évacuer ledit corps creux ;
   – à alimenter ledit conteneur ainsi vidé d'un complexe gazeux selon un débit déterminé, ledit complexe gazeux comprenant le matériau devant être déposé ;
   – à polariser ladite cathode provoquant la formation d'un plasma dudit complexe gazeux, plasma à partir duquel est déposé ledit matériau sur l'une des surfaces dudit corps creux ;
   – et enfin à évacuer les constituants du complexe gazeux non déposés dudit corps creux.

6. Dispositif cathodique, pour la mise en oeuvre du procédé selon la revendication 3, caractérisé en ce que la cathode (9) est à géométrie variable, entre deux conformations, l'une ramassée, à section étroite, et l'autre développée, à section large.

7. Dispositif selon la revendication 6, caractérisé en ce que la cathode (9) comporte un noyau métallique axial (12), une multitude de fils métalliques (13) disposés autour du et en contact électrique avec le noyau axial, sur toute la longueur de ce dernier, et des moyens de rétraction des fils, de la conformation développée à la conformation ramassée.

8. Dispositif selon la revendication 7, caractérisé en ce que dans la conformation développée, la distance (d) séparant les extrémités libres des fils métalliques (13) est du même ordre que l'épaisseur (e) de l'espace noir, en vis-à-vis de la cathode, dans les conditions du plasma mis en oeuvre.

9. Dispositif selon la revendication 8, caractérisé en ce qu'il comprend :
   – une enveloppe (15) en forme de sac, conformée et proportionnée au corps creux (1) à traiter, en matériau souple et étanche, métallisée au moins d'un côté ;
   – un bouchon (16) susceptible d'obturer le col (1a) du corps creux à traiter, comportant une ouverture axiale (16a), le col (15a) du sac étant solidarisé de manière étanche audit bouchon (16) ;
   – des moyens permettant de mettre en communication avec deux sources gazeuses (P1, P2), respectivement l'espace situé à l'intérieur du corps, entre la face intérieure (16) de ce dernier et la face extérieure (15b) métallisée de l'enveloppe, et l'espace (17) situé à l'intérieur de l'enveloppe, l'enveloppe étant susceptible de rentrer et de sortir en position retournée, du corps creux, par pilotage de la différence de pression entre les deux sources gazeuses.

10. Matériel pour le dépôt d'une couche mince d'un élément, sur la paroi d'un corps creux, caractérisé en ce qu'il comporte un dispositif cathodique selon l'une quelconque des revendications 6 à 9.

**Claims**

1. A process for depositing a thin layer of a material, for example of diamond-like amorphous carbon, on the wall of a hollow body (1) made of an electricity non- conductor material, such as glass or vitreous substance, <u>characterized</u> in that a cathode (9) is provided within the hollow body (1) to be coated, of which the variable and effective volume (14, 15b) is proportional in size and shape to the internal volume of said hollow body (1), in order to form closely to the latter a plasma of a gazeous complex comprising said material to be deposited, for example a hydrocarbon, introduced in said hollow body (1).

2. A process according to claim 1, wherein the distance between the inner surface (12) of said hollow body (1) and the apparent surface (14, 15b) of the cathode is determined to a value at most equal to the black space thickness value (2), said black space facing the cathode under the conditions of plasma employed.

3. A process according to one of claims 1 and 2, in which the hollow body to be coated comprises a neck (1a) of narrower cross-section than that of the main part (1b) of said body, wherein the cathode (9) is of variable geometry in order to be introduced in a gathered form through the neck, and then to extend in the main part in the effective and apparant volume, and vice-versa.

4. A process according to one of claims 1 to 3, in which the hollow body to be coated is a bottle, wherein the deposition of the thin layer of material is performed serially and continuously on the bottle production line in a vacuum chamber.

5. A process for depositing a thin layer of a material on the wall of a hollow body having an inner surface defining thus an internal volume, and an outer surface, characterized in that it consists in :

– inserting a cathode (9) within said hollow body spaced adjacent the inner surface of said hollow body (1), said cathode having an apparent and effective volume such that it can be inserted into said hollow body, then radially extended so as to substantially fill said internal volume of said hollow body ;

– providing an electrode spaced adjacent with the outer surface of said hollow body ;

– providing the hollow body with a closure lid, in order that the cathode is disposed within in an air tight manner and electrically insulated therefrom;

– evacuating said hollow body ;

– providing said evacuated hollow body with an adjusted flow of a gaseous complex, said gaseous complex comprising the material to be deposited ;

– polarizing said cathode, causing the formation of a plasma of said gaseous complex, from which plasma said material is deposited onto a surface of said hollow body ;

– and removing the undeposite remaining constituents of the gaseous complex.

6. A cathode device, for carrying out the process of claim 3, wherein the cathode (9) is of variable geometry, between two modes, one gathered mode with a narrow cross section, and one extended mode, with a large cross section.

7. A device according to claim 6, wherein the cathode (9) comprises an axial metal core (12), a plurality of metal wires (13) arranged around said core and being in electrical contact with said core over the entire length thereof, and means for retracting said wires from the extended mode to the gathered mode.

8. A device according to claim 7, wherein under the extended mode, the distance $\underline{d}$ between the free ends of metal wires (13) is of the same order of the thickness of the black space facing the cathode under the conditions of plasma employed.

9. A device according to claim 8, wherein it comprises :

– a bag-shaped envelope (15), proportional in size and shape to the hollow body (1) to be treated, made of supple and leakproof material, and metallized on at least one side ;

– a plug (16), capable of stoppering the neck (1a) of the hollow body to be treated, comprising an axial opening (16a), the neck (15a) of the bag being fastened in a leakproof manner to said plug (16) ;

– means making it possible to place in communication with two sources of gass (P1, P2), respectively the space situated inside the body, between the inner face (1c) of the latter and the metallized outer face (15b) of the envelope, and the space (17) situated inside the envelope, the envelope being thus able to be inserted into said hollow body and to be withdrawn in a reversed position from said hollow body, by controlling the pressure difference between both sources of gass.

10. Apparatus for depositing a thin layer of a material on the wall of a hollow body, wherein it comprises a cathode device according to one of claims 6 to 9.

**Ansprüche**

1. Verfahren zum Niederschlagen einer dünnen Schicht eines Materials, zum Beispiel eines sehr harten amorphen Kohlenstoffs, auf die Innenwand eines hohlen Körpers (1), der aus einem elektrisch nicht leitenden Material wie Glas oder einem glasartigen Material hergestellt ist, dadurch gekennzeichnet, daß in dem Inneren des zu beschichtenden hohlen Körpers (1) eine Kathode (9) angeordnet wird, deren wahrnehmbares wirksames Volumen (14, 15b) an das Innenvolumen des hohlen Körpers (1) angepaßt und zu diesem in ein passendes Verhältnis gesetzt ist, um in Kontakt mit dem letzteren ein Plasma einer gasförmigen Verbindung zu erzeugen, die das Beschichtungsmaterial enthält, z.B. einen Kohlenwasserstoff, der in den hohlen Körper (1) eingebracht ist.

2. Verfahren nach Anspruch 1, dadurch gekennzeichnet, daß der Abstand der die Innenfläche (12) des hohlen Körpers (1) und die scheinbare Oberfläche (14, 15b) der Kathode trennt, auf einen Wert größer gleich der Tiefe (2) des Dunkelraumes festgelegt ist, der unter den Bedingungen der Plasmaerzeugung gegenüber der Kathode erzeugt wird.

3. Verfahren nach den Ansprüchen 1 und 2, bei dem der zu behandelnde hohle Körper einen Hals (1a) mit einem Querschnitt aufweist, der schmaler ist als der des Hauptabschnitts (1b) des Körpers, dadurch gekennzeichnet, daß die Kathode (9) eine veränderliche Geometrie aufweist, derart, daß sie in eingezogener Gestalt in den Hals eindringen kann, und sich dann in dem Hauptabschnitt in die Gestalt mit dem wahrnehmbaren und wirksamen Volumen entfaltet, und umgekehrt.

4. Verfahren nach einem der Ansprüche 1 bis 3, bei dem der zu behandelnde hohle Körper eine Flasche ist, dadurch gekennzeichnet, daß der Niederschlag der dünnen Schicht des Materials serienmäßig in der Abfolge auf dem Fertigungsfließband der Flasche in einer Vakuumkammer bewirkt wird.

5. Verfahren zum Niederschlagen einer dünnen Schicht eines Materials auf der Innenwand eines hohlen Körpers, der eine so ein Innenvolumen begrenzende Innenfläche und eine Außenfläche aufweist, dadurch gekennzeichnet, daß es aus den Schritten besteht :

– Einsetzen einer Kathode (9) in das Innere des hohlen Körpers in Nachbarschaft zu der Innenfläche des Körpers (1), wobei die Kathode ein wahrnehmbares und wirksames Volumen aufweist, so daß sie in den hohlen Körper eingeführt und dann radial ausgebreitet werden kann, um das Innenvolumen des hohlen Körpers im wesentlichen auszufüllen ;

– Anordnen einer in Nachbarschaft der Außenfläche des hohlen Körpers positionierten Elektrode;

– Versehen des hohlen Körpers mit einem derartigen Verschlußstopfen, daß die Kathode in hermetisch abgeschlossener Weise in dessen Innerem, angeordnet und elektrisch isoliert werden kann ;

– Evakuieren des hohlen Körpers ;

– Beschicken des so luftleeren Containers mit einer festgelegten Menge einer gasförmigen Verbindung, wobei die gasförmigen Verbindung das Material enthält, das niedergeschlagen werden soll ;

– Polarisieren der Kathode, wobei die Bildung eines Plasmas der gasförmigen Verbindung bewirkt wird, ein Plasma ausgehend von dem das Material auf eine der Flächen des hohlen Körpers niedergeschlagen wird ;

– und schließlich Evakuieren der nicht auf dem hohlen Körper niedergeschlagenen Bestandteile der gasförmigen Verbindung.

6. Kathoden-Vorrichtung zur Verwendung bei dem Verfahren nach Anspruch 3, dadurch gekennzeichnet, daß die Kathode (9) eine zwischen zwei Gestalten veränderliche Geometrie aufweist, die eine eingezogen mit einem kleinen Querschnitt und die andere ausgebreitet mit einem großen Querschnitt.

7. Vorrichtung nach Anspruch 6, dadurch gekennzeichnet, daß die Kathode (9) einen axialen Metallkern (12), eine Vielzahl von Metalldrähten (13), die über die ganze Länge des axialen Kernes um diesen herum angeordnet und mit ihm in elektrischen Kontakt sind, und Einziehmittel für die Drähte, von der ausgebreiteten Gestalt in die eingezogene Gestalt, aufweist.

8. Vorrichtung nach Anspruch 7, dadurch gekennzeichnet, daß in der ausgebreiteten Gestalt der Abstand (d), der die freien Enden von den Metalldrähten (13) trennt, von der gleichen Größenordnung ist wie die Tiefe (e) des Dunkelraumes gegenüber der Kathode unter den Bedingungen der Plasmaerzeugung.

9. Vorrichtung nach Anspruch 8, dadurch gekennzeichnet, daß sie aufweist :

– eine Hülle (15) in Sackform, die an den zu behandelnden hohlen Körper (1) angepaßt und in ein passendes Verhältnis zu diesem gesetzt ist, aus einem geschmeidigen und undurchlässigen Material, das wenigstens auf einer Seite metallisiert ist ;

– einen Stopfen (16), der dazu geeignet ist, den Hals (15a) des zu behandelnden hohlen Körpers abzudichten, und der eine axiale Öffnung (16a) aufweist, wobei der Hals (15a) des Sackes in abdichtender Weise an dem Stopfen (16) befestigt ist ;

– Mittel, die es erlauben, zwei gasförmige Quellen (P1, P2) mit dem in dem Inneren des Körpers gelegenen Raum zwischen der Innenfläche (16) des letzteren und der metallisierten Außenfläche (15b) der Hülle, bzw. mit dem in dem Inneren der Hülle gelegenen Raum (17) in Verbindung zu bringen, wobei die Hülle dazu geeignet ist, durch Regulierung der Druckdifferenz zwischen den beiden gasförmigen Quellen in den hohlen Körper hineinzugelangen und in eingezogener Stellung aus ihm herauszukommen.

10. Ausrüstung zum Niederschlagen einer dünnen Schicht eines Elementes auf der Innenfläche eines hohlen Körpers, dadurch gekennzeichnet, daß sie eine Kathodenvorrichtung nach einem der Ansprüche 6 bis 9 aufweist.

FIG.1

13

1

e

1c

14

**FIG.1a**

d

9

11

12

13

12a

**FIG.2**

FIG.3